# EUROPÄISCHE PATENTSCHRIFT

(11) **EP 3 084 359 B1**
(45) Veröffentlichungstag und Bekanntmachung des Hinweises auf die Patenterteilung: **13.11.2019**
(21) Anmeldenummer: 14805852.2
(22) Anmeldetag: 27.11.2014
(51) Int. Cl.: G01F 1/36, G01F 1/50, G01F 25/00

(54) **VERFAHREN SOWIE MESSANORDNUNG NACH DEM DIFFERENZDRUCKPRINZIP MIT NULLPUNKTABGLEICH**
PROCESS AND ASSEMBLY FOR DIFFERENTIAL PRESSURE MEASUREMENTS WITH ZERO-POINT CALIBRATION
PROCÉDÉ ET ENSEMBLE DE MESURE DE PRESSION DIFFÉRENTIELLE AVEC COMPENSATION À ZÉRO

(30) Priorität: 19.12.2013 DE 102013114495
(43) Veröffentlichungstag der Anmeldung: 26.10.2016
(73) Patentinhaber: S.K.I. GmbH, 41199 Mönchengladbach (DE)
(72) Erfinder: KREMER, Friedhelm, 41199 Mönchengladbach (DE); SCHLEGEL, Michael, 71069 Sindelfingen (DE)
(74) Vertreter: KNH Patentanwälte Neumann Heine Taruttis PartG mbB
(86) Internationale Anmeldenummer: PCT/EP2014/075815
(87) Internationale Veröffentlichungsnummer: WO 2015/090895

(56) Entgegenhaltungen:
- EP-A2- 1 528 370
- AT-B- 388 809
- DE-A1- 4 408 421
- GB-A- 1 558 884
- US-A- 4 686 638

## Beschreibung

Der Gegenstand der Erfindung bezieht sich auf Verfahren sowie eine Messanordnung nach dem Differenzdruckprinzip mit Nullpunktabgleich.

Insbesondere zur Durchflussmessung von Fluiden ist es bekannt, Wirkdruckgeber zu verwenden. Ein Wirkdruckgeber umfasst z.B. eine Blende, die in eine Leitung des Fluids eingebaut ist. Durch die Blende wird der freie Strömungsquerschnitt verringert. Hierdurch entsteht vor der Blende durch den reduzierten Durchmesser ein höherer Druck. Hinter der Blende entsteht ein niedrigerer Druck. Der Wirkdruckgeber ist mit einer Messanordnung verbunden, die nach dem Differenzdruckprinzip arbeitet.

Die Messanordnung weist einen Messumformer auf, der ein zum Differenzdruck proportionales elektrisches Signal liefert. Der Messumformer weist eine Messzelle auf. Die Messzelle weist zwei Eingänge auf, die über Wirkdruckleitungen mit dem Wirkdruckgeber verbunden sind. Die Messzelle weist eine Messkammer auf, die durch eine Membran mit wenigstens einem Drucksensor in eine erste Kammer und eine zweite Kammer unterteilt ist. Die erste Kammer ist durch eine Trennmembran vom ersten Eingang und die zweite Kammer durch eine Trennmembran vom zweiten Eingang abgetrennt. Innerhalb der Kammer kann sich eine Füllflüssigkeit befinden. Die in den Kammern herrschenden Drücke werden über die Trennmembranen auf die Messmembran und den Drucksensor übertragen. Der Drucksensor liefert ein elektrisches Signal, welches ggf. verstärkt und/oder in ein digitales Signal umgewandelt wird. Das digitale Signal wird in einem Mikrocontroller weiterverarbeitet und über entsprechende Schnittstellen weiteren Systemkomponenten wie z. B. einem HART-Modem zur Verfügung gestellt.

Es ist bekannt, dass neben dem Differenzdruck auch Informationen z.B. über die Zelltemperatur, Elektroniktemperatur bereitgestellt werden.

Für die Messgenauigkeit ist es besonders bedeutsam, dass ein Nullpunktfehler möglichst gering ist und frühzeitig erkannt wird.

In der Regel wird ein Nullpunktabgleich manuell durchgeführt. Während des Nullpunktabgleichs kann keine Differenzdruckmessung erfolgen, so dass während dieser Zeit ein Ersatzwert bereitgestellt wird, derart, dass dem Anwender ein plausibler Messwert zur Verfügung steht. Die Erzeugung des Ersatzwerts kann hierbei auf verschiedene Arten erfolgen. Das Vorgehen zur Durchführung eines Nullpunktabgleichs und zur Erzeugung eines Ersatzwerts ist bspw. in der Druckschrift AT 388 809 B beschrieben.

Im Hinblick darauf, dass mit der Durchführung des Nullpunktabgleichs ein nicht unerheblicher Arbeitsaufwand verbunden ist, wird ein Nullpunktabgleich im Regelfall lediglich in größeren zeitlichen Abständen durchgeführt, wie bespielsweise aus der DE 44 08 421 A1 bekannt. Die zeitlichen Abstände können vorgegeben sein. Es ist auch bekannt, dass ein Nullpunktabgleich in Abhängigkeit von einem einstellbaren Grenzwert des gemessenen Differenzdrucks abhängig gemacht wird. Der Nullpunktabgleich erfolgt hierbei jedoch nicht direkt entsprechend einem manuellen Abgleich, sondern virtuell. Hierbei wird bspw. das Ausgangssignal bei Nullpunktbedingungen gemessen und entsprechend einer Ausgangskennlinie verschoben. Bei einer solchen Durchführung eines Nullpunktabgleichs kann von einem fiktiven Nullpunktabgleich gesprochen werden.

Hiervon ausgehend liegt der vorliegenden Erfindung die Zielsetzung zugrunde, ein Verfahren und eine Vorrichtung zur Durchführung eines Nullpunktabgleichs bereitzustellen, welches bzw. welche eine Verbesserung gegenüber dem Stand der Technik ist.

Diese Aufgabe wird erfindungsgemäß durch ein Verfahren mit den Merkmalen des Anspruchs 1 gelöst. Vorteilhafte Weiterbildungen und Ausgestaltungen des Verfahrens sind Gegenstand der abhängigen Patentansprüche.

Das erfindungsgemäße Verfahren zur Durchführung eines Nullpunktabgleichs einer Messanordnung nach dem Differenzdruckprinzip, die einen Messumformer mit einer Messzelle aufweist, der signaltechnisch mit wenigstens einer Auswerteeinheit und wenigstens einer Kommunikationseinheit verbindbar ist, zeichnet sich dadurch aus, dass zunächst die der Kommunikationseinheit bereitgestellten digitalen Signale erfasst werden. Bei der Kommunikationseinheit handelt es sich vorzugsweise um ein HART-Modem. Es können auch andere Geräte mit anderen digitalen Bussen wie PROFIBUS oder MODBUS zur Verfügung stehen.

Aus den digitalen Signalen wird wenigstens eine für den Nullpunktabgleich relevante Kenngröße ermittelt. Es wird wenigstens eine relevante Kenngröße zu einem ersten Zeitpunkt ermittelt und als Referenzkenngröße gespeichert. Zu einem zweiten Zeitpunkt, der nach dem ersten Zeitpunkt liegt, wird wenigstens eine aktuelle relevante Kenngröße ermittelt. Diese aktuelle Kenngröße wird mit der Referenzkenngröße verglichen. Ein Nullpunktabgleich der Messanordnung wird durchgeführt, wenn das Ergebnis des Vergleichs außerhalb einer vorgegebenen Toleranz liegt.

Nach einer vorteilhaften Weiterbildung des Verfahrens wird vorgeschlagen, dass nach einer Durchführung des Nullpunktabgleichs nach Schritt f) des Anspruchs 1 die aktuelle Kenngröße als Referenzgröße gespeichert wird. Werden bspw. die Ergebnisse des Vergleichs gespeichert, so können durch geeignete Algorithmen Abweichungen von der Spezifikation der Messanordnung ermittelt und zur vorbeugenden Wartung verwendet werden.

Die aktuelle Kenngröße kann kontinuierlich oder in vorgegebenen Zeitintervallen bestimmt werden.

Wird ein Nullpunktabgleich durchgeführt, so wird während des Nullpunktabgleichs der Auswerteeinheit ein Ersatzwert bereitgestellt. Der Ersatzwert basiert vorzugsweise auf Werten, die zu früheren Zeitpunkten bestimmt worden sind.

Die wenigstens eine Kenngröße ist erfindungsgemäß ein Prozessdruck oder eine Temperatur der Messzelle. Veränderungen der Temperatur der Messzelle können einen erheblichen Einfluss auf den Nullpunkt haben. Die Auswirkung der Temperatureinflüsse wird bei den bekannten Verfahren zur Durchführung eines Nullpunktabgleichs jedoch nur rein zufällig zum Zeitpunkt der Durchführung des Nullpunktabgleichs korrigiert. Der Einfluss der Änderung der Temperatur auf die Nullpunktverschiebung kann dadurch verringert werden, dass die Zeitintervalle, innerhalb derer der Nullpunktabgleich erfolgen soll, verringert werden. Dies führt jedoch zu einer Reduzierung der Verfügbarkeit der Messanordnung.

Im Gegensatz zu den bisher bekannten Verfahren zum Nullpunktabgleich, die zeitgesteuert sind, kann durch das erfindungsgemäße Verfahren eine höhere Verfügbarkeit der Messanordnung erreicht werden, da der Nullpunktabgleich im Wesentlichen nur dann erfolgt, wenn dies aufgrund der Änderungen der relevanten Kenngröße notwendig ist.

Gemäß einem weiteren erfinderischen Gedanken wird eine Messanordnung nach dem Differenzdruckprinzip vorgeschlagen. Die Messanordnung weist einen Messumformer, der eine Messzelle hat, auf. Mit dem Messumformer ist signaltechnisch eine Auswerteeinheit verbunden. Eine Kommunikationseinheit ist vorgesehen, die signaltechnisch mit dem Messumformer mittelbar oder unmittelbar verbunden ist. Die Kommunikationseinheit kann auch Bestandteil der Auswerteeinheit sein.

Die erfindungsgemäße Messanordnung weist eine Erfassungseinheit auf, die dazu geeignet und bestimmt ist, die der Kommunikationseinheit bereitgestellten digitalen Signale zu erfassen und aus den digitalen Signalen wenigstens eine für den Nullpunktabgleich relevante Kenngröße zu ermitteln. Zum Speichern wenigstens einer relevanten Kenngröße, die einem ersten Zeitpunkt zugeordnet ist und als Referenzkenngröße dient, ist eine Speichereinheit vorgesehen. In der Speichereinheit wird vorzugsweise auch eine aktuelle Kenngröße, das heißt eine relevante Kenngröße, die zu einem zweiten Zeitpunkt, der nach dem ersten Zeitpunkt liegt, gespeichert. Mittels einer Vergleichseinheit erfolgt ein Vergleich zwischen der Referenzkenngröße und der aktuellen Kenngröße. Die Vergleichseinheit liefert ein Aktivierungssignal für die Durchführung eines Nullpunktabgleichs der Messanordnung, wenn das Ergebnis des Vergleichs außerhalb einer vorgegebenen Toleranz liegt.

Die Vergleichseinheit kann auch dazu verwendet werden, einen Ersatzwert bereitzustellen, der während des Nullpunktabgleichs als Ausgangssignal für den Endverbraucher bereitgestellt wird.

Die in den Ansprüchen einzeln aufgeführten Merkmale sind in beliebiger, technologisch sinnvoller Weise miteinander kombinierbar und können durch erläuternde Sachverhalte aus der Beschreibung und Details aus den Figuren ergänzt werden, wobei weitere Ausführungsvarianten der Erfindung aufgezeigt werden.

Die Erfindung sowie das technologische Umfeld werden nachfolgend anhand der Figuren näher erläutert. Die Erfindung ist jedoch nicht auf die bevorzugten dargestellten Ausführungsbeispiele beschränkt. Es zeigen:
- Fig. 1:: schematisch einen Prozessablauf, und
- Fig. 2:: schematisch eine Messanordnung.

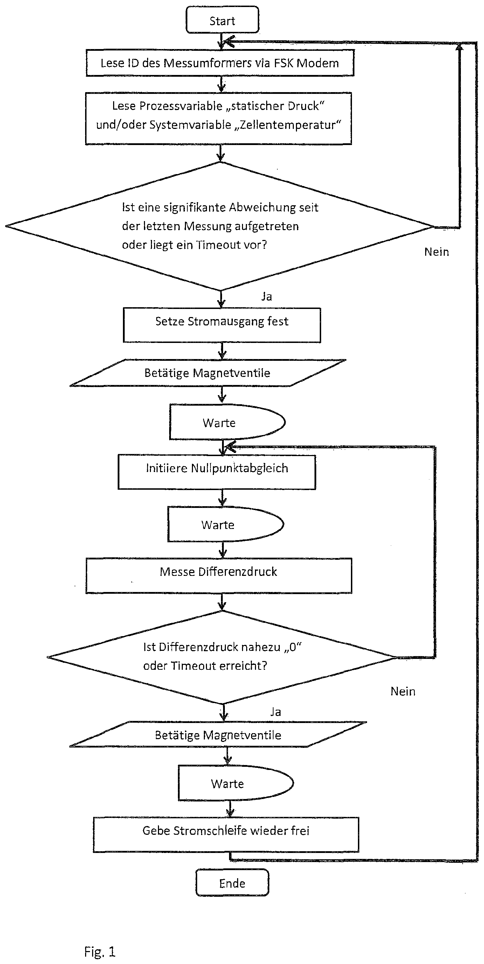

Fig. 1 zeigt schematisch den Ablauf eines Verfahrens zur Durchführung eines Nullpunktabgleichs einer Messanordnung nach dem Differenzdruckprinzip, die einen Messumformer mit einer Messzelle aufweist.

Die Messanordnung weist einen Messumformer mit einer Messzelle auf, der signaltechnisch mit wenigstens einer Auswerteeinheit und wenigsten einer Kommunikationseinheit verbindbar ist. Mittels einer Kommunikationseinheit wird zunächst eine ID des Messumformers ausgelesen. Bei der Kommunikationseinheit kann es sich bspw. um ein FSK Modem handeln. Aus den bereitgestellten digitalen Signalen werden bspw. die Zelltemperatur und/oder statischer Druck als relevante Kenngrößen ausgelesen. Es erfolgt ein Abgleich, ob eine signifikante Abweichung zwischen den aktuellen Kenngrößen und den zu einem früheren Zeitpunkt bestimmten Kenngrößen, die als Referenzkenngrößen gespeichert sind, vorliegt. Führt der Vergleich zwischen der wenigstens einen Referenzkenngröße und der wenigstens einen aktuellen Kenngröße dazu, dass das Ergebnis des Vergleichs außerhalb einer vorgegebenen Toleranz liegt, so wird ein Nullpunktabgleich durchgeführt. Während des Nullpunktabgleichs wird ein Ersatzwert bereitgestellt, da während des Nullpunktabgleichs eine Messung nach dem Differenzdruckprinzip nicht erfolgen kann. Dem Endnutzer wird ein Ersatzwert als fiktiver Messwert bereitgestellt.

Mit der Initiierung eines Nullpunktabgleichs werden entsprechende Ventile, vorzugsweise Magnetventile betätigt und nach einer vorgegebenen Zeitspanne der eigentliche Nullpunktabgleich durchgeführt. Während des Nullpunktabgleichs wird der Differenzdruck gemessen. Ist der Differenzdruck gleich Null, so werden die Ventile geöffnet. Liegen an der Kommunikationseinheit neue digitale Signale vor, so wird der Ersatzwert gelöscht und die aktuellen Messwerte dem Kunden bereitgestellt.

Zur Durchführung des Nullpunktabgleichs werden vorzugsweise Magnetventile verwendet. Mit einem ersten Magnetventil (Trennventil) wird eine Wirkdruckleitung vom Prozess getrennt. Das Trennventil ist im stromlosen Zustand geöffnet. Mit einem zweiten Ventil (Ausgleichsventil) werden während eines Nullpunktabgleichs die beiden Kammern, die beidseits der Messblende des Differenzdruckmessumformers liegen, verbunden. Hierdurch wird sichergestellt, dass der Differenzdruck gleich Null ist. Im stromlosen Zustand ist das Ausgleichsventil geschlossen.

Ist das Ausgleichsventil im stromlosen Zustand nicht vollständig geschlossen, kann dies eine Induzierung des gemessenen Differenzdrucks und damit eine Reduzierung der Messgenauigkeit zur Folge haben. Eine Zuverlässigkeit kann gesteigert werden, wenn zwei Ausgleichsventile in Reihe geschaltet werden. Dies hat auch den Vorteil, dass die Möglichkeit geschaffen wird, eine Dichtheitsprüfung der einzelnen Ventile durchzuführen. Hierzu können im Normalbetrieb in regelmäßigen Abständen jeweils eines der beiden Ausgleichsventile geöffnet werden. Ist hierbei eine Reduzierung des gemessenen Differenzdrucks festzustellen, kann davon ausgegangen werden, dass das noch geschlossene Ausgleichventil undicht ist. Bis zum Austausch des undichten Ventils kann die Messung ohne eine Beeinträchtigung der Genauigkeit weiter durchgeführt werden.

Die Prüfung, ob das eine oder alle Ausgleichsventile geöffnet sind, ist unabhängig von der Anzahl der Ausgleichsventile möglich. Ist nach dem Schließen des Trennventils und dem Öffnen des Ausgleichsventils keine signifikante Reduzierung des Differenzdrucks messbar, so kann davon ausgegangen werden, dass das Ausgleichsventil nicht geöffnet ist. Die Messung kann bis zum Austausch des fehlerhaften Ausgleichsventils weiter betrieben werden. Ein automatischer Nullpunktabgleich ist jedoch während dieser Zeit nicht möglich.

Eine Überprüfung der Dichtigkeit des Trennventils ist möglich, indem nach einem Schließen des Trennventils das Ausgleichsventil geöffnet wird. Falls sich daraufhin der Differenzdruck reduziert, jedoch nicht dem Wert Null annähert, liegt die Vermutung einer Undichtigkeit nahe. In diesem Fall wird das Ausgleichsventil wieder geschlossen. Steigt der Differenzdruck daraufhin wieder an, so kann die Aussage getroffen werden, dass eine Undichtigkeit des Trennventils vorliegt. Die Messung kann bis zum Austausch des Trennventils weiter durchgeführt werden, ein Nullpunktabgleich ist jedoch während dieser Zeit nicht möglich.

Sollte sich das Trennventil nach Durchführung des Nullpunktabgleichs nicht wieder öffnen, so ist dies daran zu erkennen, dass der gemessene Differenzdruck nach dem Befehl zum Öffnen des Ventils unverändert ist. In diesem Fall muss das Ventil ausgetauscht werden.

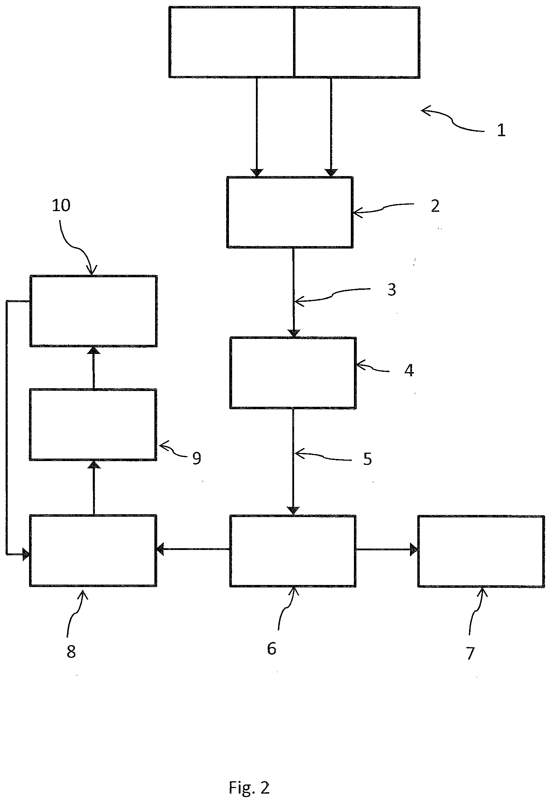

Fig. 2 zeigt schematisch eine Messanordnung nach dem Differenzdruckprinzip. Ein Wirkdruckgeber 1 ist signaltechnisch mit einem Messumformer 2 verbunden. Der Messumformer weist eine Messzelle auf, die an und für sich bekannt ist. Die Messzelle weist Sensoren, insbesondere Drucksensoren und Temperatursensoren auf. Die analogen Signale der Sensoren können verstärkt und in digitale Signale umgewandelt werden, was in einer Baueinheit 4 erfolgen kann. Die Baueinheit 4 liefert digitale Signale an eine Auswerteeinheit 6, die bspw. mit einer Anzeigeeinrichtung 7 verbunden ist. Mit dem Bezugszeichen 8 ist eine Kommunikationseinheit bezeichnet, die signaltechnisch mit dem Messumformer im dargestellten Ausführungsbeispiel mittelbar verbunden ist. Die der Kommunikationseinheit 8 bereitgestellten digitalen Signale werden über eine Erfassungseinheit 9 erfasst. Eine Referenzkenngröße und eine aktuelle Kenngröße werden in einer Speichereinheit und Vergleichseinheit, die bspw. in Form eines Mikrocomputers ausgebildet sind, ausgewertet. In Abhängigkeit vom Vergleich zwischen einer Referenzkenngröße und der aktuellen Kenngröße wird ein Aktivierungssignal für die Durchführung eines Nullpunktabgleichs der Messanordnung erzeugt.

## Patentansprüche

1. Verfahren zur Durchführung eines Nullpunktabgleichs einer Messanordnung nach dem Differenzdruckprinzip zur Durchflussmessung von Fluiden, die einen Messumformer (2) mit einer Messzelle aufweist, der signaltechnisch mit wenigstens einer Auswerteeinheit (6) und wenigstens einer Kommunikationseinheit (8) verbunden ist, bei dem
a1) der Messumformer (2) ein zum Differenzdruck proportionales Signal liefert,
a2) eine Temperatur der Messzelle und/oder ein Prozessdruck gemessen werden und ein entsprechendes Signal bereitgestellt wird,
a3) die Signale in digitale Signale umgewandelt werden,
a4) die digitalen Signale der Kommunikationseinheit (8) bereitgestellt werden,
b) aus den digitalen Signalen wenigstens eine für den Nullpunktabgleich relevante Kenngröße ermittelt wird, wobei die wenigstens eine Kenngröße die Temperatur der Messzelle oder der Prozessdruck ist;
c) die wenigstens eine relevante Kenngröße zu einem ersten Zeitpunkt als Referenzkenngröße gespeichert wird;
d) die wenigstens eine relevante Kenngröße zu einem zweiten Zeitpunkt (aktuelle Kenngröße), der nach dem ersten Zeitpunkt liegt, bestimmt wird;
e) ein Vergleich zwischen der Referenzkenngröße und der aktuellen Kenngröße durchgeführt wird;
f) ein Nullpunktabgleich der Messanordnung durchgeführt wird, wenn das Ergebnis des Vergleichs außerhalb einer vorgegebenen Toleranz liegt.

2. Verfahren nach Anspruch 1, bei dem nach einer Durchführung des Nullpunktabgleichs nach Schritt f) die aktuelle Kenngröße als Referenzkenngröße gespeichert wird.

3. Verfahren nach Anspruch 1 oder 2, bei dem die aktuelle Kenngröße kontinuierlich bestimmt wird.

4. Verfahren nach Anspruch 1 oder 2, bei dem die aktuelle Kenngröße in vorgegebenen Zeitintervallen bestimmt wird.

5. Verfahren nach einem der Ansprüche 1 bis 4, bei dem während eines Nullpunktabgleichs der Auswerteeinheit ein Ersatzwert bereitgestellt wird.

6. Messanordnung nach dem Differenzdruckprinzip ausgeführt zur Durchflussmessung von Fluiden, mit einem Messumformer (2), der eine Messzelle aufweist, und der dazu ausgeführt ist, ein zum Differenzdruck proportionales Signal zu liefern,
Sensoren, dazu ausgeführt eine Temperatur der Messzelle und/oder einen Prozessdruck zu messen und ein entsprechendes Signal bereitzustellen,
Mittel, die elektrischen Signale in digitale Signale umzuwandeln,
einer Auswerteeinheit (6), die signaltechnisch mit dem Messumformer (2) verbunden ist,
einer Kommunikationseinheit (8), die signaltechnisch mit dem Messumformer (2) mittelbar oder unmittelbar verbunden ist, wobei die Kommunikationseinheit (8) dazu ausgeführt ist, die digitalen Signale bereitgestellt zu bekommen,
einer Erfassungseinheit (9), die dazu ausgeführt ist, die der Kommunikationseinheit (8) bereitgestellten digitalen Signale zu erfassen und aus den digitalen Signalen wenigstens eine für den Nullpunktabgleich relevante Kenngröße zu ermitteln, wobei die wenigstens eine Kenngröße die Temperatur der Messzelle oder der Prozessdruck ist
einer Speichereinheit ausgeführt zum Speichern wenigstens einer relevanten Kenngröße zu einem ersten Zeitpunkt als Referenzkenngröße und wenigstens einer relevanten Kenngröße zu einem zweiten Zeitpunkt (aktuelle Kenngröße), der nach dem ersten Zeitpunkt liegt,
einer Vergleichseinheit ausgeführt zur Durchführung eines Vergleichs zwischen der Referenzkenngröße und der aktuellen Kenngröße durchgeführt wird,
und weiterhin ausgeführt zur Lieferung eines Aktivierungssignals für die Durchführung eines Nullpunktabgleichs der Messanordnung liefert, wenn das Ergebnis des Vergleichs außerhalb einer vorgegebenen Toleranz liegt.

## Claims

1. Method for carrying out a zero-point calibration of a measuring arrangement according to the differential pressure principle for flow measurement of fluids, which has a measuring transducer (2) comprising a measurement cell which is connected by means of signal technology to at least one evaluation unit (6) and at least one communication unit (8), wherein
a1) the measuring transducer (2) delivers a signal proportional to the differential pressure,
a2) a temperature of the measurement cell and/or a process pressure are measured and a corresponding signal is provided,
a3) the signals are converted into digital signals,
a4) the digital signals are provided to the communication unit (8),
b) at least one characteristic quantity relevant to the zero-point calibration is determined from the digital signals, wherein the at least one characteristic quantity is the temperature of the measurement cell or the process pressure,
c) the at least one relevant characteristic quantity is stored at a first time as a reference characteristic quantity;
d) the at least one relevant characteristic quantity is determined at a second time (current characteristic quantity), which lies after the first time;
e) a comparison between the reference characteristic quantity and the current characteristic quantity is carried out;
f) a zero-point calibration of the measuring arrangement is carried out when the result of the comparison lies outside a predetermined tolerance.

2. Method according to Claim 1, wherein the current characteristic quantity is stored as the reference characteristic quantity after the zero-point calibration has been carried out according to step f).

3. Method according to Claim 1 or 2, wherein the current characteristic quantity is determined continuously.

4. Method according to Claim 1 or 2, wherein the current characteristic quantity is determined at predetermined time intervals.

5. Method according to one of Claims 1 to 4, wherein a substitute value is provided to the evaluation unit during a zero-point calibration.

6. Measuring arrangement according to the differential pressure principle designed for flow measurement of fluids comprising a measuring transducer (2) which has a measurement cell, and which is designed to deliver a signal proportional to the differential pressure, sensors which are designed to measure a temperature of the measurement cell and/or a process pressure and to provide a corresponding signal,
means which convert the electrical signals into digital signals,
an evaluation unit (6) which is connected by means of signal technology to the measuring transducer (2),
a communication unit (8) which is connected indirectly or directly by means of signal technology to the measuring transducer (2), wherein the communication unit (8) is designed to receive the digital signals in a provided state,
a recording unit (9) which is designed to record the digital signals provided to the communication unit (8) and to determine at least one characteristic quantity relevant to the zero-point calibration from the digital signals, wherein the at least one characteristic quantity is the temperature of the measurement cell or the process pressure,
a storage unit designed for storing at least one relevant characteristic quantity at a first time as a reference characteristic quantity and at least one relevant characteristic quantity at a second time (current characteristic quantity), which lies after the first time,
a comparison unit designed to carry out a comparison is carried out between the reference characteristic quantity and the current characteristic quantity, and furthermore designed to deliver an activation signal for carrying out a zero-point calibration of the measuring arrangement when the result of the comparison lies outside a predetermined tolerance.

## Revendications

1. Procédé pour effectuer un réglage du zéro d'un montage de mesure fonctionnant selon le principe de la pression différentielle pour la mesure de débit de fluides, qui comporte un transducteur de mesure (2) équipé d'une cellule de mesure reliée par une technique de signalisation à au moins une unité d'évaluation (6) et au moins une unité de communication (8), selon lequel
al) le transducteur de mesure (2) délivre un signal proportionnel à la pression différentielle,
a2) une température de la cellule de mesure et/ou une pression de processus sont mesurées et un signal correspondant est fourni,
a3) les signaux sont convertis en signaux numériques,
a4) les signaux numériques sont fournis à l'unité de communication (8),
b) à partir des signaux numériques, au moins un paramètre pertinent pour le réglage du zéro est déterminé, dans lequel ledit au moins un paramètre est la température de la cellule de mesure ou la pression de processus ;
c) ledit au moins un paramètre pertinent est stocké à un premier instant en tant que paramètre de référence ;
d) ledit au moins un paramètre pertinent est déterminé à un deuxième instant (paramètre actuel) qui se situe après le premier instant ;
e) une comparaison est effectuée entre le paramètre de référence et le paramètre actuel ;
f) un réglage du zéro du montage de mesure est effectué lorsque le résultat de la comparaison se situe en dehors d'une tolérance prédéterminée.

2. Procédé selon la revendication 1, dans lequel, après avoir effectué le réglage du zéro selon l'étape f), le paramètre actuel est stocké en tant que paramètre de référence.

3. Procédé selon la revendication 1 ou 2, dans lequel le paramètre actuel est déterminé en continu.

4. Procédé selon la revendication 1 ou 2, dans lequel le paramètre actuel est déterminé à des intervalles de temps prédéterminés.

5. Procédé selon l'une des revendications 1 à 4, dans lequel une valeur de substitution est fournie lors d'un réglage du zéro de l'unité d'évaluation.

6. Montage de mesure fonctionnant selon le principe de la pression différentielle pour la mesure de débit de fluides, qui comporte un transducteur de mesure (2) équipé d'une cellule de mesure, et conçu pour fournir un signal proportionnel à la pression différentielle,
des capteurs conçus pour mesurer une température de la cellule de mesure et/ou une pression de processus et pour fournir un signal correspondant,
des moyens pour convertir les signaux électriques en signaux numériques,
une unité d'évaluation (6) reliée par une technique de signalisation au transducteur de mesure (2),
une unité de communication (8) reliée indirectement ou directement par une technique de signalisation au transducteur de mesure (2), dans lequel l'unité de communication (8) est conçue pour recevoir les signaux numériques fournis,
une unité de détection (9) conçue pour détecter les signaux numériques fournis à l'unité de communication (8) et pour déterminer à partir des signaux numériques au moins un paramètre pertinent pour le réglage du zéro, dans lequel ledit au moins un paramètre est la température de la cellule de mesure ou la pression de processus,
une unité de stockage conçue pour stocker au moins un paramètre pertinent à un premier instant en tant que paramètre de référence et au moins un paramètre pertinent à un second instant (paramètre actuel) qui se situe après le premier instant,
une unité de comparaison conçue pour effectuer une comparaison entre le paramètre de référence et le paramètre actuel,
et en outre conçu pour délivrer un signal d'activation permettant d'effectuer un réglage du zéro du montage de mesure lorsque le résultat de la comparaison se situe en dehors d'une tolérance prédéterminée.
